# EUROPÄISCHE PATENTSCHRIFT

(11) **EP 2 977 661 B1**
(45) Veröffentlichungstag und Bekanntmachung des Hinweises auf die Patenterteilung: **02.08.2017**
(21) Anmeldenummer: 15175512.1
(22) Anmeldetag: 06.07.2015
(51) Int. Cl.: F16L 11/02, F16L 11/08

(54) **VERFAHREN ZUR AUFBRINGUNG EINER INNENBESCHICHTUNG AUF DIE INNENOBERFLÄCHE EINES SCHLAUCHES**
METHOD FOR APPLYING AN INNER COATING TO THE INNER SURFACE OF A HOSE
PROCEDE D'APPLICATION D'UN REVETEMENT INTERNE SUR LA SURFACE INTERIEURE D'UN TUYAU

(30) Priorität: 09.07.2014 AT 5532014
(43) Veröffentlichungstag der Anmeldung: 27.01.2016
(73) Patentinhaber: A. Haberkorn & Co GmbH, 4240 Freistadt (AT)
(72) Erfinder: Gruber, Raphael, 4320 Perg (AT); Hopfinger, Thomas, 4232 Hagenberg (AT)
(74) Vertreter: Ofner, Clemens

(56) Entgegenhaltungen:
- WO-A1-01/58664
- DE-A1- 2 904 934
- US-A- 3 459 621
- US-A- 4 472 126
- US-A- 4 738 735

## Beschreibung

Die folgende Erfindung betrifft ein Verfahren zur Aufbringung einer Innenbeschichtung mittels einer Beschichtungsvorrichtung auf die Innenoberfläche eines Schlauches in einem kontinuierlichem Verfahren, welcher Schlauch aus zumindest zwei Schlauchelementen durch Fügen der zumindest zwei Schlauchelemente zu einem Schlauch hergestellt wird, wobei unmittelbar nach dem Fügen der zumindest zwei Schlauchelemente während des Passierens der Fügevorrichtung durch die Schlauchelemente auf die Innenoberfläche des Schlauches aufgebracht wird, wobei das Fügen durch Verkreuzen der Schlauchelemente erfolgt, sodass die Schlauchelemente teilbereichsweise unterschiedliche Höhenlagen zueinander aufweisen.

Ein Schlauch kann einen Querschnitt mit einer Querschnittsform oder Querschnittsgröße aufweisen, welche Querschnittsform und/oder Querschnittsgröße das Einbringen einer Beschichtungsvorrichtung in den Querschnitt des Schlauches nicht erlaubt. Ebenso kann ein Schlauch eine Schlauchlänge aufweisen, sodass ein Einbringen einer Beschichtungsvorrichtung und das Bewegen dieser entlang der Länge des Schlauches einen nicht zumutbaren Aufwand darstellt.

EP0054162A1 offenbart ein Verfahren zur Herstellung eines Schlauches für eine Wurst. Nach dem Stand der Technik werden Abschnitte des Schlauches mit einer Wurstmasse gefüllt.

EP0062812A1 offenbart ein Verfahren, bei welchem ein Fluid in das Innere des Schlauches eingebracht wird. Anschließend wird der Querschnitt des Schlauches geschlossen, wobei das an der Innenoberfläche des Schlauches haftende Fluid die Innenbeschichtung ausbildet. Der Fachmann erkennt, dass dieses Verfahren nicht für die Herstellung einer Innenbeschichtung von beliebig langen Schläuchen geeignet ist.

Gemäß Figuren 3 und 4 von EP0457561A2 zeigen, dass das in EP0457561A2 offenbarte Verfahren die Aufbringung der Innenbeschichtung nach dem Fügen betrifft.

In US3813313A und US3941087A wird die Beschichtung vor dem Fügen aufgebracht.

JPH07299878A offenbart ein Verfahren, bei weichem die Beschichtung vor dem Fügen aufgebracht wird.

EP0457561A2, US3813313A, US3941087A und JPH07299878A betreffen weiters Verfahren, bei welchen nur ein Schlauchelement zu einem Schlauch gefügt wird.

US472126A, WO01/58664, US3459621A, US4738735A offenbaren Verfahren, bei welchen das die Beschichtung ausformende Ausgangsmaterial mittels Extruder beziehungsweise Schraubenpresse auf die Innenoberfläche aufgepresst wird.

DE2904934A1 offenbart ein Verfahren, bei welchem die Innenbeschichtung auf einen geschweißten und somit dichten Schlauch aufgebracht wird. DE2904934A1 offenbart nicht das Aufbringen der Innenbeschichtung zum Abdichten von gekreuzten Schlauchelementen.

Die im Folgenden offenbarte Erfindung stellt sich die Aufgabe der Bereitstellung eines Verfahrens, nach welchem die Innenoberfläche von Schläuchen mit einer beliebigen Länge und einem beliebigen Querschnitt beschichtet werden. Vorzugsweise soll das erfindungsgemäße Verfahren kontinuierlich durchführbar sein, sodass die Herstellung von Schläuchen - wie beispielsweise in EP0054162A1 angeregt - kontinuierlich abläuft.

Die Innenbeschichtung ist weiters über Teilbereiche der Innenoberfläche oder über die gesamte Oberfläche der Innenoberfläche gleichmäßig herzustellen. Es sollen Teilbereiche unterschiedlich ausgebildeten Innenbeschichtungen ausgebildet werden können.

Erfindungsgemäß wird dies dadurch erreicht, dass die Innenbeschichtung zum Abdichten der Schlauchelemente mittels Sprühkopf aufgebracht wird.

Es wird die Innenbeschichtung unmittelbar nach der Herstellung des Schlauches auf die Innenoberfläche des herzustellenden Schlauches aufgebracht.

Das Aufbringen der Innenbeschichtung kann nach dem genannten Stand der Technik unmittelbar nach dem Fügen des zumindest einen Schlauchelements erfolgen. Der Fachmann erkennt, dass ein Aufbringen der Innenbeschichtung nach oder unmittelbar nach dem Fügen des zumindest einen Schlauchelements ein zumindest teilweises Einbringen der Beschichtungsvorrichtung in den geschaffenen Querschnitt bedingt. Die Aufgabe des notwendigen Einbringens der Beschichtungsvorrichtung beschränkt sich allerdings nur auf jenen Teil der Beschichtungsvorrichtung, mittels welchem die Beschichtung aufgebracht wird.

Der Fachmann kennt Fügevorrichtungen und Beschichtungsvorrichtungen nach dem Stand der Technik.

Die notwendigen Fügevorrichtungen zur Herstellung des Schlauches sind in einer Vorrichtung zur Durchführung des erfindungsgemäßen Verfahrens vorzugsweise außerhalb des herzustellenden Querschnittes angeordnet, während die Beschichtungsvorrichtungen innerhalb des herzustellenden Querschnittes und somit benachbart zu der Innenoberfläche angeordnet sind. Diese Konfiguration der Vorrichtung erlaubt die Durchführung eines kontinuierlichen Verfahrens.

Eine Fügevorrichtung nach dem Stand der Technik umfasst zumindest ein Leitelement, mit welchem zumindest ein Schlauchelemente zumindest während des Fügens in eine definierte Lage gebracht wird, Beim Aufbringen der Innenbeschichtung auf die verkreuzten Schlauchelemente ist es entscheidend, dass diese in einer definierten Lage gehalten werden, um so ein zufriedenstellendes Aufbringen der Innenbeschichtung in einem Bereich zwischen zumindest zwei Schlauchelementen, insbesondere in einem Bereich zwischen zumindest zwei verkreuzten Schlauchelementen mit unterschiedlichen Höhenlagen zu erreichen. Der beschriebene Schlauchelementabstandsbereich ist oftmals eine Fehlstelle in Bezugnahme auf Undichtigkeiten.

Vorzugsweise wird der Schlauch beziehungsweise wird das Schlauchelement so lange in der definierten Lage gehalten, bis die Innenbeschichtung erhärtet ist, sodass nicht die Innenbeschichtung durch eine Deformation des Schlauchelementes beschädigt wird.

Das Ausgangsmaterial der Innenbeschichtung kann in einem gasförmigen und/oder flüssigen und/oder festen Zustand aufgebracht werden.

Der Fachmann wählt die geeigneten Beschichtungstechniken und Beschichtungsvorrichtungen in Abhängigkeit des Materials des Schlauches und des Beschichtungsmaterials, um den späteren Anforderungen an Schlauch und Beschichtung gerecht zu werden.

Der Fachmann wählt weiters die geeignete Steuerungstechnik zu Durchführung der Beschichtung in Teilbereichen des zumindest einen Schlauchelementes beziehungsweise des hergestellten Schlauches.

Die zumindest zwei Schlauchelemente können im Prinzip jede erdenkliche Form aufweisen, solange die zusammengefügten Schlauchelemente einen Schlauch ausbilden. Die Schlauchelemente sind somit vorzugsweise kongruent. Die Schlauchelemente können sich beispielsweise in Bezug auf den herzustellenden Schlauch linear, radial oder schraubenlinienförmig erstrecken. Die Wahl der Form des beziehungsweise der Schlauchelemente ist eine rein geometrische Aufgabenstellung, welche der Fachmann unter anderem in Bezug auf die Anforderungen an den herzustellenden Schlauch lösen kann.

Die Schlauchelemente können als Fäden oder Bänder ausgebildet sein. Bei Verwendung von Schlauchelementen in Form von Fäden oder Bändern können diese mittels einer Webtechnologie nach dem Stand der Technik zueinander verkreuzt werden, sodass die gewobenen Fäden oder die gewobenen Bänder einen Schlauch ausbilden.

Bei Anwendung von Webtechnologie zur Herstellung eines Schlauches beginnt der Vorgang des Webens und somit des Fügens mit dem über- beziehungsweise untereinanderlegen der Schlauchelemente im Sinne eines Verkreuzens. Der Vorgang des Webens als Fügetechnik endet mit dem Abschluss der Positionierung der Schlauchelemente, nämlich der Schuss- und Kettfäden zueinander.

Während des Webens kann anfänglich der Bereich zwischen den gegebenenfalls gekreuzten Fäden oder Bändern offen sein. Es kann somit das Ausgangsmaterial in den Bereich zwischen den Fäden oder Bändern eintreten, welcher offene Bereich als Teil des Webeverfahrens anschließend geschlossen werden. Das in den Bereich zwischen den Fäden oder Bändern eingetretene Ausgangsmaterial dichtet somit diesen Bereich zwischen den Fäden ab. Das erfindungsgemäße Verfahren kann umfassen, dass die Innenbeschichtung während des Webens und nach dem Weben aufgebracht wird.

Das Aufbringen der Innenbeschichtung kann unter Beaufschlagung des zumindest einen Schlauchelements mit Druck oder Unterdruck und/oder bei einem definierten Temperaturbereich des Ausgangsmaterials oder des zumindest einen Schlauchelements erfolgen.

Der Druck oder Unterdruck und/oder der definierte Temperaturbereich kann sowohl an einer Seite des Schlauches oder des zumindest einen Schlauchelementes oder an mehreren Seiten dieser aufgebracht werden.

Das erfindungsgemäße Verfahren kann auch unter atmosphärischem Druck durchgeführt werden.

Der Fachmann stattet eine Vorrichtung zur Durchführung des erfindungsgemäßen Verfahrens mit den notwendigen Hilfsmitteln aus, um das erfindungsgemäße Verfahren unter optimalen Bedingungen wie Temperatur, Druck et cetera durchführen zu können. Die Auswahl und die Anordnung dieser Hilfsmittel stellt für den Fachmann eine rein ingenieurmäßige Aufgabe dar.

Es kann beispielsweise der Schlauch oder die zumindest zwei Schlauchelemente aus einem porösen Material hergestellt sein. Ein Auftragen der Innenbeschichtung unter Druck kann den Effekt haben, dass das Ausgangsmaterial der innenbeschichtung in das poröse Material eintritt und/oder durch dieses teilweise hindurchtritt. Ebenso kann das Verfahren zwischen die beabstandeten Schlauchelemente hindurchtreten. Im Fall eines Hindurchtretens des Ausgangsmaterials wird durch das Aufbringen einer Innenbeschichtung auch eine Außenbeschichtung hergestellt.

Das erfindungsgemäße Verfahren kann auch umfassen, dass die Außenoberfläche des Schlauches unmittelbar vor und/oder während und/oder nach dem Fügen des zumindest einen Schlauchelements beschichtet wird.

Der Fachmann ordnet die hierzu notwendige Beschichtungsvorrichtung in der Vorrichtung zur Durchführung des erfindungsgemäßen Verfahrens vorzugsweise benachbart zu der Außenoberfläche und somit außerhalb des herzustellenden Querschnittes an.

In Abhängigkeit der Art der Beschichtung, des Ausgangsmaterials et cetera kann das erfindungsgemäße Verfahren auch weitere Verfahrensschritte nach dem Stand der Technik umfassen, welche weiteren Verfahrensschritte ein Haften der Innenbeschichtung und/oder der Außenbeschichtung verbessern. Beispielsweise können die weiteren Verfahrensschritte eine Wärmebehandlung des Schlauches umfassen.

Die zumindest zwei Schlauchelemente können entlang von Fügelinien oder Fügeflächen zu einem Schlauch gefügt werden. Es können die Fügelinie oder Fügeflächen des zumindest einen Schlauchelements miteinander verbunden werden.

Obige Beschreibung und die nachfolgende Figurenbeschreibung ist keinesfalls einschränkend zu werten. Der Fachmann kann die Anzahl der herzustellenden Schläuche und die Anzahl der herzustellenden Beschichtungen unter Heranziehung seines Fachwissens multiplizieren. Es ist beispielsweise denkbar, dass zumindest zwei Schlauchelemente zu einem Innenschlauch und einem den Innenschlauch umhüllenden Außenschlauch gefügt werden, wobei zumindest auf die Innenoberfläche eines Schlauches aus Innenschlauch und Außenschlauch zumindest eine Lage einer Beschichtung aufgebracht werden kann. Die aufzubringende Beschichtung kann auch klebende Eigenschaften aufweisen, sodass mit Hilfe der Beschichtung der Innenschlauch und der Außenschlauch miteinander verklebt werden.

In den Figuren sind die folgenden Elemente mit den vorgestellten Bezugszeichen gekennzeichnet.
- 2: 1 Innenbeschichtung Beschichtungsvorrichtung
- 3: Innenoberfläche
- 4: Schlauch
- 5: Produktionsachse
- 6,6': Schlauchelement
- 7: Ausgangsmaterial
- 8: Außenoberfläche
- 9: frei
- 10: Fügevorrichtung
- 11: Produktionsrichtung
- 12: Außenbeschichtungsvorrichtung
- 13: Sprühkopf
- 14: Schlauchelementabstandsbereich
- 15,15': Erstreckungsrichtung des Schlauchelementes

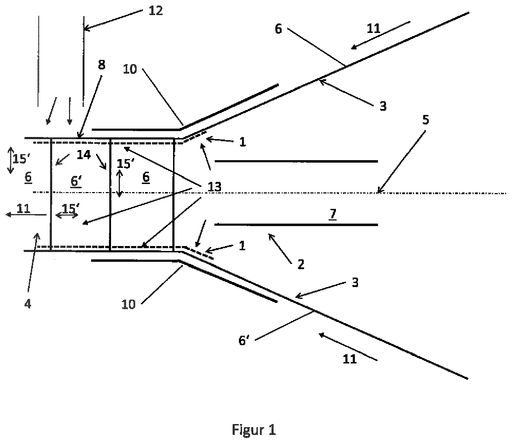

Figur 1 zeigt ein Schnittbild eines Schlauches 4, welcher unter Anwendung des erfindungsgemäßen Verfahrens in einem kontinuierlichen Verfahren hergestellt wird.

Der Schlauch 4 wird aus zwei Schlauchelementen 6, 6' durch Fügen mittels einer Fügevorrichtung 10 nach dem Stand der Technik hergestellt. Es werden hierbei die Schlauchelemente 6, 6' entlang einer Fügelinie unter Ausbildung des Schlauches 4 durch Verkreuzen der Schlauchelemente 6,6' verbunden. Im Schlauch 4 weist das erste Schlauchelement 6 eine erste Erstreckungsrichtung 15, das zweite Schlauchelement 6' eine zweite Erstreckungsrichtung 15' auf. Wegen des Verkreuzens der Schlauchelemente 6, 6' weisen diese unterschiedliche Höhenlagen zueinander auf. Die Schlauchelemente 6,6' weisen im Schlauch 4 einen Schlauchelementabstandsbereich 14 auf, in welchem die Schlauchelemente 6,6' zueinander als Folge der unterschiedlichen Höhenlagen beabstandet sind. In der Webtechnologie ist der hierzu analoge Begriff des Fadenabstandes bekannt.

Es sind derartige Fügevorrichtungen 10 nach dem Stand der Technik bekannt; es ist in Figur 1 die Fügevorrichtung 10 nur schematisch dargestellt. Zur Durchführung des kontinuierlichen Verfahrens werden die Schlauchelemente 6, 6' eine Leitvorrichtung der Fügevorrichtung 10 passierend gezogen, sodass die Schlauchelemente 6,6' im Bereich der Leitvorrichtung eine definierte Lage zueinander und in Bezug auf einen Sprühkopf 13 aufweisen.

Es ist in Figur 1 die Beschichtungsvorrichtung 2 - in Produktionsrichtung 11 gesehen - vor der Fügevorrichtung 10 angeordnet. Die Beschichtungsvorrichtung 2 und die Fügevorrichtung 10 sind entlang einer Produktionsachse 5 nacheinander angeordnet.

Es wird somit die Innenbeschichtung 1 mittels einer Beschichtungsvorrichtung 2 auf die Innenoberfläche 3 des Schlauches 4 zumindest nach dem Fügen der Schlauchelemente 6 aufgebracht. Durch das Bringen der Schlauchelemente 6,6' durch die Leitelemente der Fügevorrichtung 10 in eine definierte Lage zu den Leitelementen, wird erreicht, dass die Schlauchelemente 6,6' während des Aufbringens der Innenbeschichtung zum Sprühkopf 13 eine definierte Lage aufweisen. Hierdurch wird erreicht, dass der Schlauchelementabstandsbereich 14 mit der Innenbeschichtung in einem definierten Ausmaß bedeckt wird.

Durch die definierte Lage der Schlauchelemente 6,6' zueinander wird erreicht, dass die aufgebrachte Innenbeschichtung während des Trocknens nicht durch eine Deformation zerstört wird.

Das in Figur 1 gezeigte Verfahren umfasst auch die Aufbringung der Innenbeschichtung vor dem Fügen. Das Ausgangsmaterial 7 der Innenbeschichtung 1 wird bei dem in Figur 1 dargestellten Beispiel in einem gasförmigen Zustand mittels der Beschichtungsvorrichtung 2 auf die Innenoberfläche 3 aufgebracht.

Die Beschichtungsvorrichtung 2 umfasst bei dem in Figur 1 gezeigten Beispiel einen Sprühkopf 13, durch welchen das Ausgangsmaterial 7 aus der Beschichtungsvorrichtung 2 austritt. Das Ausgangsmaterial 7 erhärtet auf der Innenoberfläche 3 während des Fügens der Schlauchelemente 6, 6'.

Der Fachmann wählt die genaue Position des Sprühkopfes 13 in Bezug auf die Erhärtung des Ausgangsmaterials 7 zu der Innenbeschichtung 1 und des Prozesses des Fügens der Schlauchelemente 6,6', sodass diese Prozesse sich nicht wechselseitig behindern.

Die Außenoberfläche 8 des Schlauches 4 wird nach dem Fügen der Schlauchelemente 6,6' ebenso mittels einer Außenbeschichtungsvorrichtung 12 beschichtet.

## Patentansprüche

1. Verfahren zur Aufbringung einer Innenbeschichtung (1) mittels einer Beschichtungsvorrichtung (2) auf die Innenoberfläche (3) eines Schlauches (4) in einem kontinuierlichem Verfahren,
welcher Schlauch (4) aus zumindest zwei Schlauchelementen(6,6') durch Fügen der zumindest zwei Schlauchelemente (6,6') zu einem Schlauch hergestellt wird,
wobei unmittelbar nach dem Fügen der zumindest zwei Schlauchelemente (6,6') während des Passierens der Fügevorrichtung (10) durch die Schlauchelemente (6,6') auf die Innenoberfläche (3) des Schlauches (4) aufgebracht wird,
wobei das Fügen durch Verkreuzen der Schlauchelemente (6,6') erfolgt, sodass die Schlauchelemente (6,6') teilbereichsweise unterschiedliche Höhenlagen zueinander aufweisen,
**dadurch gekennzeichnet, dass**
die Innenbeschichtung (1) zum Abdichten der Schlauchelemente (6,6') mittels Sprühkopf aufgebracht wird.

2. Verfahren nach Anspruch 1, **dadurch gekennzeichnet, dass** das Ausgangsmaterial (7) der Innenbeschichtung (1) in einem gasförmigen und/oder flüssigen und/oder festen Zustand aufgebracht wird.

3. Verfahren nach einem der Ansprüche 1 bis 2, **dadurch gekennzeichnet, dass** das Aufbringen der Innenbeschichtung (7) unter Beaufschlagung des zumindest einen Schlauchelements (6) mit Druck oder Unterdruck und/oder bei einem definierten Temperaturbereich des Ausgangsmaterials (7) oder der Schlauchelemente (6,6') erfolgt.

4. Verfahren nach einem der Ansprüche 1 bis 3, **dadurch gekennzeichnet, dass** die Außenoberfläche (8) des Schlauches (4) unmittelbar vor und/oder während und/oder nach dem Fügen der zumindest zwei Schlauchelements (6, 6') beschichtet wird.

## Claims

1. A method for applying an inner coating (1) by means of a coating device (2) to an inner surface (3) of a hose (4) in a continuous method,
which hose (4) is made of at least two hose elements (6, 6') by joining the at least two hose elements (6, 6') to form a hose,
wherein, directly after the joining of the at least two hose elements (6, 6') while the hose elements (6, 6') pass through the joining device (10) is applied to the inner surface (3) of the hose (4),
wherein the joining takes place by means of crossing the hose elements (6, 6'), so that the hose element (6, 6') have different height positions to one another in partial areas, **characterized in that**
the inner coating (1) for sealing the hose elements (6, 6') is applied by means of spray head.

2. The method according to claim 1, **characterized in that** the basic material (7) of the inner coating (1) is applied in a gaseous and/or liquid and/or solid state.

3. The method according to one of claims 1 to 2, **characterized in that** the application of the inner coating (7) takes place by applying pressure or low pressure to the at least one hose element (6) and/or in a defined temperature range of the basic material (7) or of the hose elements (6, 6').

4. The method according to one of claims 1 to 3, **characterized in that** the outer surface (8) of the hose (4) is coated directly prior to and/or during and/or after the joining of the at least two hose elements (6, 6').

## Revendications

1. Procédé d'application d'un revêtement intérieur (1) au moyen d'un dispositif de revêtement (2) sur la surface interne (3) d'un tuyau (4) dans un procédé en continu, cet tuyau (4) étant constituée d'au moins deux éléments du tuyau (6, 6') par la jonction des au moins deux éléments de tuyau (6, 6') en un tuyau,
immédiatement après la jonction des au moins deux éléments du tuyau (6, 6'), l'application ayant lieu pendant le passage du dispositif de jonction (10) à travers les éléments du tuyau (6, 6') sur la surface interne (3) du tuyau (4),
la jonction ayant lieu par croisement des éléments du tuyau (6, 6'), de façon à ce que les éléments du tuyau (6, 6') présentent partiellement des positions en hauteur différentes entre elles,
**caractérisé en ce que**
le revêtement interne (1) est appliqué pour l'étanchéification des éléments du tuyau (6, 6') au moyen d'une tête de pulvérisation.

2. Procédé selon la revendication 1, **caractérisé en ce que** le matériau première (7) du revêtement interne (1) est appliqué dans un état gazeux et/ou liquide et/ou solide.

3. Procédé selon l'une des revendications 1 à 2, **caractérisé en ce que** l'application du revêtement interne (7) a lieu en exerçant sur l'au moins un élément du tuyau (6), une pression ou une dépression et/ou a lieu dans un domaine de température défini du matériau de départ (7) et des éléments du tuyau (6, 6').

4. Procédé selon l'une des revendications 1 à 3, **caractérisé en ce que** la surface externe (8) du tuyau (4) est revêtue immédiatement avant et/ou pendant et/ou après la jonction des au moins deux éléments du tuyau (6, 6').
